# EUROPÄISCHE PATENTSCHRIFT

(11) **EP 1 628 870 B1**
(45) Veröffentlichungstag und Bekanntmachung des Hinweises auf die Patenterteilung: **15.09.2010**
(21) Anmeldenummer: 04785895.6
(22) Anmeldetag: 19.05.2004
(51) Int. Cl.: B62D 5/04, B62D 6/00

(54) **VERFAHREN ZUR LENKUNGSREGELUNG**
CONTROL METHOD FOR A STEERING SYSTEM
PROCEDE DE REGULATION DE DIRECTION

(30) Priorität: 23.05.2003 DE 10323844
(43) Veröffentlichungstag der Anmeldung: 01.03.2006
(73) Patentinhaber: Continental Teves AG & Co. oHG, 60488 Frankfurt am Main (DE)
(72) Erfinder: GIERS, Bernhard, 60320 Frankfurt (DE)
(74) Vertreter: Graf, Ulrich
(86) Internationale Anmeldenummer: PCT/EP2004/050861
(87) Internationale Veröffentlichungsnummer: WO 2005/014368

(56) Entgegenhaltungen:
- DE-A- 10 033 107
- DE-A- 19 941 535
- US-A1- 2003 060 955

## Beschreibung

Die vorliegende Erfindung betrifft ein Verfahren zur Lenkungsregelung für eine Lenkung, wobei ein erstes Zusatz-Lenkmoment aufgebracht wird, das dem Fahrer einen Hinweis über ein falsches Lenkverhalten und/oder einen Hinweis auf eine angemessene Korrektur seines Lenkverhalten gibt und wobei eine Überwachung und eine Auswertung der Reaktion des Fahrers auf das erste Zusatz-Lenkmoment durchgeführt werden und basierend auf der Auswertung mindestens ein zweites Zusatz-Lenkmomentes entsprechend einer vorgegebenen Folgestrategie auf die Lenkung aufgebracht wird.

Überlagerungslenkungen sind bekannt, bei denen einem vom Fahrer eingegebenen Lenkmoment bei Bedarf ein weiteres (geregeltes) Moment durch einen Aktuator überlagert werden kann. Das zusätzliche Moment wird durch einen Regler definiert und dient in der Regel zur Erhöhung der Stabilität und Agilität des Fahrzeugs. Es besteht auch die Möglichkeit, Störgrößen zu kompensieren. Mit derartigen Systemen kann darüber hinaus dem Fahrer der Eindruck eines sportlich direkten Lenkverhaltens bis hin zum betont komfortablen Lenkverhalten vermittelt werden.

Bei Schleudermanövern sind viele Fahrer bezüglich eines angebrachten Lenkverhaltens überfordert.
Fahrdynamikregelungen (ESP-Systeme) erkennen solche Schleuderzustände und bringen stabilisierende Momente über die Betriebsbremse in das Fahrzeug ein. Wenn der Fahrer in diesen Situationen mit seiner Lenkaktivität unangemessen reagiert, können bei bisher eingesetzten Systemen Lenkmomente lediglich durch hohen Radschlupf an den Rädern reduziert werden.

Aus der DE 100 33 107 A ist ein Verfahren der eingangs genannten Gattung bekannt. Das vorbekannte Verfahren beschreibt eine Lenkvorrichtung für ein Fahrzeug mit einem Lenkbetätigungselement, wobei das Lenkbetätigungselement mit einem Widerstandselement verbunden ist, mit welchem ein veränderbares, auf das Lenkbetätigungselement wirkendes Widerstandsmoment erzeugbar ist, wobei das Widerstandselement ein elektro-rheologisches und/oder magneto-rheologisches Fluid aufweist.

Die US 2003/060955 A offenbart ein Verfahren, bei dem aufgrund der Auswertung von Fahrzeugdaten ein Zusatzmoment am Lenkrad aufgebracht wird, wobei zur Generierung eines fahrzustandsabhängigen additiven Zusatzmoments am Lenkrad eines Fahrzeugs und das Zusatzmoment mittels eines Faktors und dem Schwimmwinkel gebildet wird, und das Zusatzmoment diejenige Lenkradstellung vorgibt, die einer der Stabilisierung des aktuellen Fahrzustandes dienenden Radstellung der lenkbaren Fahrzeugräder entspricht

Ziel dieser Erfindung ist es, eine Lenkungsregelung für ein Lenksystem mit einer Lenkmomentüberlagerung bereitzustellen, welches die Fahrdynamik unterstützt und die Fahrsicherheit erhöht.

Die Aufgabe wird dadurch gelöst, dass bei der Ermittlung des Fahrerlenkverhaltens eine Reaktion auf das erste Zusatz-Lenkmoment erkannt wird, wobei das aufzubringende zweite Zusatz-Lenkmoment reduziert wird, wenn die Reaktion des Fahrers auf das erste Zusatz-Lenkmoment rasch erfolgte und wobei das aufzubringende zweite Zusatz-Lenkmoment erhöht wird, wenn die Lenkreaktion des Fahrers auf das erste Zusatz-Lenkmoment langsam erfolgte und dass ein drittes Zusatz-Lenkmoment in Richtung Fahrzeugstabilisierung erzeugt wird, wenn die Reaktion des Fahrers auf das erste Zusatz-Lenkmoment eine Fahrzeugdestabilisierung verursacht oder diese verstärkt, wobei das dritte Zusatz-Lenkmoment in Richtung Fahrzeugstabilisierung beibehalten oder verstärkt wird, wenn eine Reaktion des Fahrers entgegen diesem dritten Zusatz-Lenkmoment ermittelt wird und wobei das dritte Zusatz-Lenkmoment in Richtung Fahrzeugstabilisierung verringert wird, wenn eine Reaktion des Fahrers in Richtung dieses dritten Zusatz-Lenkmoments ermittelt wird.

Durch das Aufbringen des Zusatz-Lenkmoments nach der Erfindung kann ein Komfortgewinn erzielt werden. Das Verfahren kann aber auch genutzt werden, um den Fahrer in bestimmten Fahrsituationen, die ihn ggf. überfordern, eine Hilfestellung zu geben. Dazu wird die Reaktion des Fahrers auf Zusatz-Momente durch einen elektronischen Regler ausgewertet. Daraus resultierend wird die zeitliche und absolute Dimensionierung von Zusatz-Momenten so angepasst, dass diese als "Warnmomente" dienen. Darüber hinaus wird überwacht, ob der Fahrer die Lenkkorrektur in der gewünschten Richtung durchführt. Abhängig von der Reaktion wird die Warnstrategie (Momentendimensionierung) angepasst. Eine vorteilhafte Ausgestaltung des erfindungsgemäßen Verfahrens besteht darin, dass das Fahrerlenkverhalten kontinuierlich ermittelt wird und das Zusatz-Lenkmoment kontinuierlich veränderbar ist.

Erfindungsgemäß wird bei der Ermittlung des Fahrerlenkverhaltens eine Lenkreaktion des Fahrers auf eine dynamische Fahrsituation berücksichtigt. Unter dem Begriff "dynamische Fahrsituation" sind alle Fahrsituationen mit einer relativ raschen Änderung der Fahrzeugrichtung und/oder der Fahrzeuggeschwindigkeit zu verstehen, die zu einer Instabilität des Fahrzeugs bzw. der gewünschten Fahrzeugbewegung führen können. Denn viele Fahrer sind bei instabilen Fahrsituationen, wie Schleudermanövern, bezüglich eines angebrachten Lenkverhaltens überfordert. Liegt ein Schleuderzustand vor, dann wird der Fahrer durch ein bestimmtes Lenkverhalten darauf regieren. Nach Maßgabe der Änderung des Fahrerlenkverhaltens wird erfindungsgemäß ein Zusatz-Lenkmoment erzeugt oder ein bereits aufgebrachtes Zusatz-Lenkmoment verändert.

Die Erfindung nutzt die Momentenüberlagerung vorteilhaft, um dem Fahrer einen Hinweis zu einem angebrachten Lenkverhalten zu geben. Führt der Fahrer beispielsweise eine Lenkbewegung durch, die für die aktuelle Fahrzeuggeschwindigkeit unangemessen ist, so wir ab einem kritischen Lenkradwinkel ein Moment bzw. Drehmoment, ein "Hinweis-Lenkmoment", auf das Lenkrad aufgebracht, das dem Fahrer einen Hinweis über ein falsches Lenkverhalten und/oder einen Hinweis auf eine angemessene Korrektur seines Lenkverhalten gibt. Damit wird dem Fahrer eine unmittelbare Rückmeldung über sein Lenkverhalten gegeben.

Er wird so in die Lage versetzt, seinen falschen Lenkeingriff zu korrigieren.

Nach einer weiteren Ausgestaltung der Erfindung wird die Lenkreaktion des Fahrers auf das Zusatz-Lenkmoment, das dem Fahrer einen Hinweis über ein falsches Lenkverhalten und/oder einen Hinweis auf eine angemessene Korrektur seines Lenkverhalten gibt, ermittelt und anschließend ein Zusatz-Lenkmoment nach Maßgabe der ermittelten Fahrerreaktion aufgebracht.

Nach der Erfindung wird dabei überwacht, wie schnell, wie häufig und wie heftig der Fahrer auf den Hinweis reagiert. Das Zusatz-Moment kann dabei verändert werden oder aber beibehalten werden.

Vorzugsweise wird das Zusatz-Lenkmoment dem ermittelten Fahrerlenkverhalten automatisch angepasst.

Vorteilhaft wird vorgesehen, dass wenn bei der Ermittlung des Fahrerlenkverhaltens eine richtige Reaktion auf das Zusatz-Moment erkannt wird, das aufzubringende Zusatz-Moment reduziert wird, wenn die Lenkreaktion des Fahrers auf das Zusatz-Moment rasch erfolgte und das aufzubringende Zusatz-Moment erhöht wird, wenn die Lenkreaktion des Fahrers auf das Zusatz-Moment langsam erfolgte.

Nach einer weiteren Ausgestaltung der Erfindung ist es vorgesehen, dass wenn die Lenkreaktion auf das Zusatz-Moment eine Fahrzeugdestabilisierung verursacht oder diese verstärkt, ein weiteres Zusatz-Moment in Richtung Destabilisierung erzeugt wird und dann beibehalten oder verstärkt wird, wenn eine Lenkreaktion entgegen diesem Zusatz-Moment ermittelt wird und dann verringert wird, wenn eine Lenkreaktion in Richtung dieses Zusatz-Moments ermittelt wird.

Es ist nach der Erfindung vorgesehen, dass das Zusatz-Lenkmoment durch einen elektronisch ansteuerbaren Unterstützungsmotor, insbesondere einen Elektromotor, erzeugt wird oder mittels einer elektromechanischen Servolenkung.

Die Erfindung wird durch nachfolgende Ausführungsbeispiele näher erläutert.

Führt der Fahrer eine Lenkbewegung durch, die für die aktuelle Lenksituation und Fahrzeuggeschwindigkeit unangemessen ist, wird dem Fahrer erfindungsgemäß durch ein Zusatz-Moment ein Hinweis zu einem der aktuellen Fahrsituation angebrachten Lenkverhalten gegeben. Ab einem kritischen Lenkradwinkel wird ein Zusatz-Moment auf das Lenkrad aufgebracht.

Der Fahrer kann nun auf zwei mögliche Arten reagieren: er kann sich dem elektronisch generierten Hinweis widersetzen oder diesem folgen. Nach der Erfindung wird diese Reaktion des Fahrers ausgewertet. Es wird überwacht ob, wie schnell, wie heftig und in welcher Richtung der Fahrer auf das elektronisch/elektrisch aufgebrachte Zusatz-Moment reagiert.

Zunächst wird der einfachere Fall betrachtet, in dem der Fahrer in der richtigen Weise reagiert, d.h. die Lenkwinkelkorrektur in die fahrzeugstabilisierende Richtung durchführt. Die Reaktion des Fahrers wird ausgewertet und die Parameter für Folgewarnungen werden angepasst. Wenn er unmittelbar, d.h. rasch reagiert hat, werden die Parameter für das aufzubringende Zusatz-Moment weiter reduziert, die Amplitude als Funktion des vom Fahrer aufgebrachten Fehlwinkels wird reduziert. Reagierte der Fahrer eher träge oder langsam, so werden die Parameter entgegengesetzt variiert.

Wenn der Fahrer das aufgebrachte Warnmoment eher wie z.B. eine Fahrbahnstörung betrachtet, d.h. wenn seine Lenkreaktion als Folge des Warnmomentes eher in Richtung einer fahrzeugdestabilisierenden Richtung tendiert, werden zwei weiter Folgestrategien genutzt.

Es wird zunächst im Regelsystem angenommen, dass der Fahrer in dieser Situation gegenphasig reagiert. Es wird dann durch eine kurze Phase der Momentenüberlagerung in Richtung der das Fahrzeug destabilisierenden Richtung angesteuert, um eine Fahrerreaktion zu ermitteln.

Widersetzt sich der Fahrer diesem Moment, d.h. führt er eine Lenkreaktion entgegen diesem Moment durch (in diesem Fall fahrzeugstabilisierend), so wird diese Warnstrategie beibehalten.

Reagiert der Fahrer dagegen weiterhin, indem er eine fahrzeugdestabilisierende Lenkwinkelkorrektur oder keine Lenkwinkelkorrektur durchführt, so wird weiter die übliche Warnstrategie des Aufbringens eines Gegenmoments genutzt.

In jedem Fall aber bewirkt die Auswertung der Fahrerreaktion eine Anpassung der Regelparameter und daher eine automatische und komfortable Adaption des Regelsystems an das aktuelle Fahrerverhalten auf die durch die Momentenüberlagerung auf das Lenkrad aufgebrachten Momente. Dadurch werden Komfort und Sicherheit bei dem Einsatz der Momentenüberlagerung auf das Lenkrad verbessert. Denn die Möglichkeiten des Systems werden nicht nur genutzt, um dem Fahrer ein Gefühl von direktem bis sportlichem Lenkverhalten zu ermöglichen. Vielmehr gibt das System ihm in Situationen, die ein für ihn ungeübtes Lenkverhalten erfordern, insbesondere oder Schleudermanöver, eine Hilfestellung. Eine weitere unterstützende Funktion der Momentenüberlagerung nach der Erfindung ist auch für Einparkvorgang vorgesehen. Hier kann dem Fahrer der richtige Zeitpunkt und das richtige Maß des optimalen Lenkvorgangs signalisiert werden.

## Patentansprüche

1. Verfahren zur Lenkungsregelung für eine Lenkung, wobei ein erstes Zusatz-Lenkmoment aufgebracht wird, das dem Fahrer einen Hinweis über ein falsches Lenkverhalten und/oder einen Hinweis auf eine angemessene Korrektur seines Lenkverhalten gibt und wobei eine Überwachung und eine Auswertung der Reaktion des Fahrers auf das erste Zusatz-Lenkmoment durchgeführt werden und basierend auf der Auswertung mindestens ein zweites Zusatz-Lenkmomentes entsprechend einer vorgegebenen Folgestrategie auf die Lenkung aufgebracht wird, **dadurch gekennzeichnet, dass** bei der Ermittlung des Fahrerlenkverhaltens eine Reaktion auf das erste Zusatz-Lenkmoment erkannt wird, wobei das aufzubringende zweite Zusatz-Lenkmoment reduziert wird, wenn die Reaktion des Fahrers auf das erste Zusatz-Lenkmoment rasch erfolgte und wobei das aufzubringende zweite Zusatz-Lenkmoment erhöht wird, wenn die Lenkreaktion des Fahrers auf das erste Zusatz-Lenkmoment langsam erfolgte und dass ein drittes Zusatz-Lenkmoment in Richtung Fahrzeugstabilisierung erzeugt wird, wenn die Reaktion des Fahrers auf das erste Zusatz-Lenkmoment eine Fahrzeugdestabilisierung verursacht oder diese verstärkt, wobei das dritte Zusatz-Lenkmoment in Richtung Fahrzeugstabilisierung beibehalten oder verstärkt wird, wenn eine Reaktion des Fahrers entgegen diesem dritten Zusatz-Lenkmoment ermittelt wird und wobei das dritte Zusatz-Lenkmoment in Richtung Fahrzeugstabilisierung verringert wird, wenn eine Reaktion des Fahrers in Richtung dieses dritten Zusatz-Lenkmoments ermittelt wird.

2. Verfahren nach Anspruch 1
**dadurch gekennzeichnet,**
**dass** die Reaktion des Fahrers, wie schnell, wie häufig und wie heftig der Fahrer auf das erste aufgebrachte Zusatz-Lenkmoment als Hinweis über eine fahrzeugdestabilisierende und/oder eine fahrzeugstabilisierende Lenkwinkelkorrektur reagiert, über das am Lenkrad aufgebrachte Lenkmoment überwacht wird

3. Verfahren nach einem der Ansprüche 1 bis 2,
**dadurch gekennzeichnet,**
**dass** das zweite Zusatz-Lenkmoment basierend auf der ermittelten Reaktion des Fahrers auf das erste Zusatz-Lenkmoment automatisch angepasst wird.

4. Verfahren nach einem Ansprüche 1 bis 3,
**dadurch gekennzeichnet,**
**dass** die Zusatz-Lenkmomente durch einen elektronisch ansteuerbaren Unterstützungsmotor erzeugt werden.

## Claims

1. Control method for a steering system, wherein a first additional steering torque is applied, which additional steering torque gives the driver an indication of an incorrect steering behaviour and/or an indication of an appropriate correction of his steering behaviour, and wherein monitoring and evaluation of the reaction of the driver to the first additional steering torque are carried out, and on the basis of the evaluation at least one second additional steering torque is applied to the steering system in accordance with a predefined follow-on strategy, **characterized in that** when the steering behaviour of the driver is determined, a reaction to the first additional steering torque is detected, wherein the second additional steering torque which is to be applied is reduced if the reaction of the driver to the first additional steering torque took place quickly and wherein the second additional steering torque which is to be applied is increased if the steering reaction of the driver to the first additional steering torque took place slowly, and **in that** a third additional steering torque in the direction of vehicle stabilization is generated if the reaction of the driver to the first additional steering torque cause destabilization of the vehicle or increased destabilization of the vehicle, wherein the third additional steering torque in the direction of stabilization of the vehicle is maintained or increased if a reaction of the driver counter to this third additional steering torque is determined, and wherein the third additional steering torque is reduced in the direction of stabilization of the vehicle if a reaction of the driver in the direction of this third additional steering torque is determined.

2. Method according to Claim 1
**characterized**
**in that** the reaction of the driver, how quickly, how frequently and how strongly the driver reacts to the first applied additional steering torque as an indication of a vehicle-destabilizing and/or a vehicle-stabilizing steering angle correction is monitored by means of the steering torque applied to the steering wheel.

3. Method according to one of Claims 1 to 2,
**characterized**
**in that** the second additional steering torque is adapted automatically on the basis of the determined reaction of the driver to the first additional steering torque.

4. Method according to one of Claims 1 to 3,
**characterized**
**in that** the additional steering torques are generated by an assistance motor which can be actuated electronically.

## Revendications

1. Procédé de régulation d'une direction dans lequel est appliqué un premier couple supplémentaire de direction qui donne au conducteur une indication d'un comportement erroné de conduite et/ou une indication sur une correction modérée de son comportement de conduite,
une surveillance et une évaluation de la réaction du conducteur au premier couple supplémentaire de direction étant réalisée et au moins un deuxième couple supplémentaire de direction correspondant à une stratégie de suivi prédéterminée étant appliqué sur la direction sur la base de l'évaluation,
**caractérisé en ce que**
une réaction sur le premier couple supplémentaire de direction est détectée lors de la détermination du comportement du conducteur,
**en ce que** le deuxième couple supplémentaire de direction à appliquer est réduit si la réaction du conducteur au premier couple supplémentaire de direction a été rapide,
**en ce que** le deuxième couple supplémentaire de direction à appliquer est augmenté si la réaction de direction du conducteur au premier couple supplémentaire de direction a été lente et
**en ce qu'**un troisième couple supplémentaire de direction est formé en direction d'une stabilisation du véhicule si la réaction du conducteur au premier couple supplémentaire de direction provoque une déstabilisation du véhicule ou la renforce, le troisième couple supplémentaire de direction étant maintenu ou renforcé en direction d'une stabilisation du véhicule si la réaction détectée du conducteur s'oppose à ce troisième couple supplémentaire de direction et le troisième couple supplémentaire de direction étant diminué en direction d'une stabilisation du véhicule si la réaction déterminée du conducteur s'exerce en direction de ce troisième couple supplémentaire de direction.

2. Procédé selon la revendication 1, **caractérisé en ce que** la réaction du conducteur, sa rapidité, sa fréquence et la violence avec laquelle le conducteur réagit au couple de direction supplémentaire appliqué en premier est surveillée par l'intermédiaire du couple de direction appliqué sur le volant en tant qu'indication d'une correction d'angle de direction qui déstabilise le véhicule et/ou qui stabilise le véhicule.

3. Procédé selon l'une des revendications 1 et 2, **caractérisé en ce que** le deuxième couple supplémentaire de direction est adapté automatiquement au premier couple supplémentaire de direction sur la base de la réaction du conducteur qui a été déterminée.

4. Procédé selon l'une des revendications 1 à 3, **caractérisé en ce que** les couples supplémentaires de direction sont formés par un moteur d'assistance à commande électronique.
